# FASCICULE DE BREVET EUROPEEN

(11) **EP 1 276 273 B1**
(45) Date de publication et mention de la délivrance du brevet: **06.09.2006**
(21) Numéro de dépôt: 02291673.8
(22) Date de dépôt: 04.07.2002
(51) Int. Cl.: H04L 12/10

(54) **Dispositif de protection pour un terminal raccordé à un réseau local capable de télé-alimenter des terminaux**
Schutzvorrichtung für ein Endgerät angeschlossen an ein lokales Netz mit Fernspeisung für das Endgerät
Protection device for a terminal connected to a local area network having terminal remote power supply

(30) Priorité: 09.07.2001 FR 0109088
(43) Date de publication de la demande: 15.01.2003
(73) Titulaire: ALCATEL, 75008 Paris (FR)
(72) Inventeur: Le Creff, Michel, 95450 Vigny (FR); Gass, Raymond, 67150 Bolsenheim (FR)
(74) Mandataire: Sciaux, Edmond

(56) Documents cités:
- WO-A-00/41496
- WO-A-99/53627
- US-A- 5 790 363

## Description

La présente invention concerne un dispositif de protection utilisable pour protéger un terminal susceptible d'être raccordé à un réseau local capable de télé-alimenter des terminaux. Ce réseau peut être notamment de type Ethernet.

Classiquement, les terminaux connectés à un réseau local informatique (par exemple : ordinateurs personnels, imprimantes, etc ...) sont alimentés localement, par le secteur. Mais il est souhaitable que certains terminaux reliés à un réseau local informatique soient téléalimentés, à travers la même liaison que celle utilisée pour émettre/recevoir des données. C'est notamment le cas des postes téléphoniques raccordés à un réseau informatique.

Il es connu de WO-A-0041496 un réseau local incluant un système de cablage permettant la téléalimentation de noeuds du réseau. Pour éviter les problèmes de surtension et court-circuit, la composante continue de la téléalimentation est bloquée avant l'entrée de données des noeuds concernés.

Dans un réseau Ethernet, par exemple, une liaison comporte huit fils. Quatre de ces huit fils sont deux paires de fils utilisées respectivement pour transmettre et recevoir des données. Quatre fils sont inutilisés. Une première façon de transmettre un courant de téléalimentation consiste à utiliser les quatre fils inutilisés. Une autre façon, dite par circuit fantôme, consiste à relier les deux bornes d'un générateur d'alimentation respectivement aux points milieux d'un enroulement de transformateur relié à la paire de réception de données et d'un enroulement d'un autre transformateur relié à la paire d'émission de données, dans le dispositif de téléalimentation. Du côté du terminal, la tension d'alimentation est fournie respectivement par les points milieux d'un enroulement de transformateur relié à la paire de réception de données et d'un enroulement d'un autre transformateur relié à la paire d'émission de données.

La prise à laquelle est relié un terminal est généralement utilisée de la manière suivante :
- Quatre fils des huit fils sont séparés en deux paires pour respectivement transmettre et recevoir des données. Le terminal comporte un transformateur ayant un enroulement relié à la paire de réception, et un transformateur ayant un enroulement relié à la paire d'émission, chacun de ces enroulements ayant un point milieu qui peut être relié à un potentiel de référence via une résistance de faible valeur.
- Quatre autres fils, inutilisés, sont mis à la masse, souvent par l'intermédiaire d'une combinaison de résistances et de capacités, pour éliminer les éventuels courants de diaphonie induits par les signaux de données circulant dans les quatre premiers fils, et pour réduire les émissions électromagnétiques indésirables.

Si on applique une tension d'alimentation relativement élevée, par exemple 48 Volts, sur cette combinaison de résistances et de capacités, ou sur les résistances reliées aux points milieux des transformateurs, l'intensité du courant circulant dans ces résistances peut les détruire. Les terminaux conçus pour être téléalimentés ne présentent pas ce risque. Mais la prise située à l'extrémité de la liaison peut recevoir un terminal classique qui n'a pas été conçu pour être téléalimenté, ni même pour supporter la tension de télé-alimentation (par exemple un ordinateur personnel, une imprimante, etc...). Il y a un risque d'endommager les circuits électriques de ce terminal.

Il est envisagé de réaliser des dispositifs de télé-alimentation comportant un dispositif pour reconnaître automatiquement si un terminal est téléalimentable, avant d'appliquer la télé-alimentation. Cependant, ce dispositif est insuffisant pour protéger les terminaux classiques dans certains cas. En particulier, certains réseaux Ethernet réutilisent le câblage d'un réseau numérique à intégration de services, et il arrive que plusieurs prises soient reliées en parallèle. Dans un tel cas, le fait de brancher un terminal téléalimentable sur l'une de ces prises provoque l'application d'un tension de télé-alimentation sur les autres prises qui sont en parallèle. Il y a donc un risque qu'un usager branche un terminal classique sur l'une d'elles, et endommage ce terminal.

L'invention vise donc à remédier à ce problème.

L'objet de l'invention est un dispositif de protection pour un terminal susceptible d'être raccordé à une prise reliée à un réseau local capable de télé-alimenter des terminaux, **caractérisé** en ce qu'il comporte :
- des moyens pour empêcher la propagation d'un courant continu de cette prise vers le terminal ;
- et des moyens pour signaler à un utilisateur la présence d'une tension de télé-alimentation sur la prise considérée.

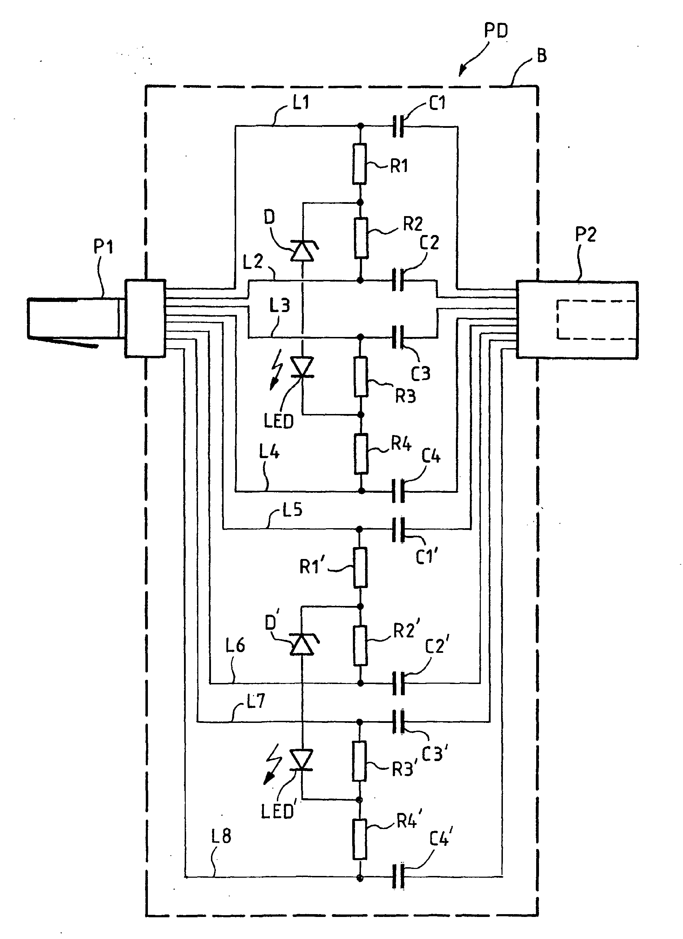

L'invention sera mieux comprise et d'autres caractéristiques apparaîtront à l'aide de la description ci-dessous et de la figure l'accompagnant. Cette figure représente un mode de réalisation PD du dispositif de protection selon l'invention, destiné à être utilisé dans un réseau Ethernet. Il comporte :
- un boîtier B ;
- une prise mâle P1, de type RJ45, solidaire du boîtier B, et comportant huit contacts, et destinée à être insérée dans une prise femelle murale d'un réseau Ethernet capable de téléalimenter des terminaux ;
- une prise femelle P2, de type RJ45, solidaire du boîtier B, et comportant huit contacts, et destinée à recevoir une prise mâle RJ45 reliée à un terminal Ethernet quelconque, téléalimentable ou non.

Parmi les huit contacts de la prise mâle P1, quatre qui correspondent aux conducteurs utilisés pour la transmission de données et la télé-alimentation, sont reliés respectivement aux quatre contacts correspondants de la prise femelle P2, respectivement par des conducteurs L1, ..., L4, interrompus par des condensateurs C1, ...,C4 destinés à arrêter la tension continue (48V) de télé-alimentation. Quatre autres contacts de la prise mâle P1, qui correspondent à des conducteurs inutilisés dans un réseau Ethernet classique, sont reliés respectivement aux quatre contacts correspondants de la prise femelle P2, respectivement par des conducteurs L5, ..., L8, interrompus par des condensateurs C1', ...,C4' destinés à arrêter la tension continue (48V) de télé-alimentation qui peut être appliquée en supplément ou en remplacement de celle appliquée sur les quatre conducteurs mentionnés précédemment.

Pour signaler la présence d'une tension de télé-alimentation, le dispositif PD comporte en outre les composants suivants :
- un pont de deux résistances R1, R2 en dérivation sur les deux conducteurs L1 et L2 qui sont utilisés pour l'émission de données vers le réseau et pour un potentiel 0V de la télé-alimentation ;
- un pont de deux résistances R3, R4 en dérivation sur les deux conducteurs L3 et L4 qui sont utilisés pour la réception de données venant réseau et pour un potentiel -48V de la télé-alimentation ;
- une diode électroluminescente LED en série avec une diode Zener ZD de 24V, la cathode de la diode Zener ZD étant relié au point milieu du pont R1, R2, et la cathode de la diode électroluminescente LED étant reliée au point milieu du pont R3, R4.

Des composants analogues, dont la référence porte l'attribut prime, sont utilisés pour signaler la présence d'une tension de télé-alimentation sur les conducteurs L4 à L8 :
- un pont de deux résistances R1', R2' en dérivation sur la paire de conducteurs L4 et L5 ;
- un pont de deux résistances R3', R4' en dérivation sur la paire de conducteurs L3 et L4 ;
- une diode Zener ZD' et une diode électroluminescente LED', reliées en série, entre le point milieu du pont R1', R2' et le point milieu du pont R3', R4'.

Dans le cas, où le dispositif de protection serait utilisé uniquement dans un réseau où les quatre conducteurs inutilisés pour la transmission de données seraient inutilisés aussi pour la télé-alimentation, il serait possible d'omettre la partie du dispositif de protection correspondante. Les quatre contacts de la prise mâle P1 qui correspondent aux conducteurs inutilisés pour la transmission de données et la télé-alimentation, seraient alors reliés directement et respectivement aux quatre contacts correspondants de la prise femelle P2.

Grâce la diode Zener ZD, la diode électroluminescente LED ne consomme du courant que pendant la phase de télé-alimentation, et pas pendant la phase de détection du terminal, cette détection étant réalisée par des signaux de test ayant une tension inférieure à 24 V. Les résistances R1 à R4 ont toutes une même valeur pour conserver la symétrie sur les lignes, et cette valeur est choisie de façon à permettre un allumage convenable de la diode électroluminescente LED. La valeur de R1+R2 et la valeur de R3+R4 sont très supérieures à l'impédance de ligne. Elles ne perturbent donc pas les signaux de données. D'autre part, elles consomment une part négligeable de l'énergie fournie par le dispositif de télé-alimentation pour un terminal.

Pour assurer la sécurité des terminaux classiques dans un réseau Ethernet capable de télé-alimenter des terminaux, il convient de placer un tel dispositif PD au moins dans toutes les prises qui ne sont pas reliées individuellement à un port de concentrateur ou de répéteur. Si on ignore le câblage d'une prise, il n'y a aucun inconvénient à placer le dispositif de protection dans cette prise, par précaution.

Lorsqu'un usager veut brancher un terminal téléalimentable sur une prise qui est munie du dispositif de protection, il faut qu'il enlève le dispositif de protection puis qu'il branche la prise mâle du terminal à la place du dispositif PD. Après le branchement de ce terminal téléalimentable, le dispositif de téléalimentation le détecte puis applique la télé-alimentation. Celle-ci peut être appliquée seulement sur les conducteurs inutilisés, ou seulement sur les conducteurs de transmission de données, ou sur l'ensemble des conducteurs. Dans le premier cas, la diode LED' de chaque dispositif de protection PD placé dans la ou les prises reliée(s) en parallèle brille et avertit ainsi les utilisateurs qu'il aurait un danger à retirer un dispositif de protection et à brancher à sa place un terminal classique. Dans le deuxième cas, la diode LED de chaque dispositif de protection PD placé dans la ou les prises reliée(s) en parallèle brille. Dans le troisième cas, la diode LED et la diode LED' de chaque dispositif de protection PD placé dans la ou les prises reliée(s) en parallèle brillent.

Selon une variante de réalisation, le dispositif de protection ne comporte pas de prises P1 et P2 directement solidaires du boîtier, mais est intercalé sur un câble de liaison Ethernet qui comporte des prises mâles RJ 45 respectivement à ses deux extrémités. Ce câble est alors utilisé à la place du câble classique pour chaque terminal non téléalimentable qui est susceptible d'être utilisé dans le réseau considéré.

Selon une autre variante, ce dispositif est incorporé à un terminal tel qu'un ordinateur personnel conçu pour supporter la tension de télé-alimentation, et comportant une prise permettant de relier un second terminal au réseau, le premier terminal ayant lui-même une liaison au réseau, et étant utilisé comme intermédiaire ou comme répéteur. Le second terminal peut alors être de type quelconque puisqu'il est placé en aval d'un dispositif de protection.

## Revendications

1. Dispositif de protection pour un terminal susceptible d'être raccordé à une prise reliée à un réseau local capable de télé-alimenter des terminaux, comportant
- des moyens (C1, ..., C4 ; C1', ..., C4') pour empêcher la propagation d'un courant continu de cette prise vers le terminal ; et **caractérisé par**
des moyens (R1, ..., R4, ZD, LED ; R1', ..., R4', ZD', LED') pour signaler à un utilisateur la présence d'une tension de télé-alimentation sur la prise considérée.

2. Dispositif de protection selon la revendication 1, pour un réseau comportant au moins quatre conducteurs (L1, ...,L4) parmi lesquels une paire est utilisée pour transmettre un premier pôle d'une tension de télé-alimentation, et pour transmettre des données dans un premier sens, et une autre paire est utilisée pour transmettre l'autre pôle de cette tension de télé-alimentation, et pour transmettre des données dans un autre sens ; **caractérisé en outre en ce que** les moyens pour empêcher la propagation d'un courant continu de cette prise vers le terminal comportent un condensateur (C1, ..., C4) sur chacun de ces conducteurs ;
et **en ce que** moyens pour signaler à un utilisateur la présence d'une tension de télé-alimentation sur la prise considérée comportent :
- un premier pont de deux résistances (R1, R2) en dérivation sur la première paire de conducteurs (L1 et L2) ;
- un deuxième pont de deux résistances (R3, R4) en dérivation sur la seconde paire de conducteurs (L3 et L4) ;
- et un moyen de signalisation (ZD, LED) relié au point milieu du premier pont (R1, R2) et au point milieu du deuxième pont (R3, R4).

3. Dispositif de protection selon la revendication 2, pour un réseau comportant au moins quatre conducteurs supplémentaires (L5, ...,L8) parmi lesquels une paire est utilisée pour transmettre un premier pôle d'une seconde tension de télé-alimentation, et une autre paire est utilisée pour transmettre l'autre pôle de cette seconde tension de télé-alimentation ; **caractérisé en outre en ce que** les moyens pour empêcher la propagation d'un courant continu de cette prise vers le terminal comportent un condensateur (C1', ..., C4') sur chacun de ces quatre conducteurs supplémentaires ;
et **en ce que** les moyens pour signaler à un utilisateur la présence d'une tension de télé-alimentation sur la prise considérée comportent :
- un troisième pont de deux résistances (R1', R2) en dérivation sur la première paire de conducteurs supplémentaires (L4 et L5) ;
- un quatrième pont de deux résistances (R3', R4') en dérivation sur la seconde paire de conducteurs supplémentaires (L3 et L4) ;
- un moyen de signalisation (ZD', LED') relié au point milieu du troisième pont (R1', R2') et au point milieu du quatrième pont (R3', R4').

## Claims

1. A protection device for a terminal that can be connected to a jack connected to a local area network capable of providing a remote power feed to terminals, including:
- means (C1, ..., C4; C1', ..., C4') for preventing the propagation of a direct current from said jack to the terminal, and **characterised by**
- means (R1, ..., R4, ZD, LED; R1', ..., R4', ZD', LED') for signalling to a user the presence of a remote power feed voltage at the jack concerned.

2. A protection device according to claim 1, for a network including at least four conductors (L1, ..., L4) of which one pair of conductors is used to send a first pole of a remote power feed voltage and to send data in a first direction and another pair of conductors is used to send the other pole of said remote power feed voltage and to send data in another direction, further **characterised in that** the means for preventing the propagation of a direct current from said jack to the terminal include a capacitor (C1, ..., C4) on each of said conductors and **in that** means for signalling to a user the presence of a remote power feed voltage at the jack concerned include:
- a first bridge comprising two resistors (R1, R2) bridging the first pair of conductors (L1 and L2);
- a second bridge comprising two resistors (R3, R4) bridging the second pair of conductors (L3 and L4); and
- signalling means (ZD, LED) connected to the mid-point of the first bridge (R1, R2) and to the mid-point of the second bridge (R3, R4).

3. A protection device according to claim 2, for a network including at least four additional conductors (L5, ..., L8), one pair of which is used to send a first pole of a second remote power feed voltage and another pair of which is used to send the other pole of said second remote power feed voltage, further **characterised in that** the means for preventing the propagation of a direct current from said jack to the terminal include a capacitor (C1', ..., C4') on each of said four additional conductors, and **in that** the means for signalling to a user the presence of a remote power feed voltage at the jack concerned include:
- a third bridge comprising two resistors (R1', R2) bridging the first pair of additional conductors (L5 and L6);
- a fourth bridge comprising two resistors (R3', R4') bridging the second pair of additional conductors (L7 and L8); and
- signalling means (ZD', LED') connected to the mid-point of the third bridge (R1', R2') and to the mid-point of the fourth bridge (R3', R4').

## Patentansprüche

1. Schutzvorrichtung für ein Endgerät, das an eine Steckdose angeschlossen werden kann, die mit einem lokalen Netz verbunden ist, mit Femspeisung für das Endgerät, beinhaltend
- Mittel (C1, ..., C4; C1', ..., C4'), um die Ausbreitung eines Gleichstroms von dieser Steckdose zum Endgerät zu verhindern; und **gekennzeichnet durch**
Mittel (R1, ..., R4, ZD, LED; R1', ..., R4', ZD', LED'), um einem Nutzer das Vorliegen einer Fernspeisungsspannung an der betreffenden Steckdose anzuzeigen.

2. Schutzvorrichtung gemäß Anspruch 1, für ein Netz, das mindestens vier Leiter (L1, ..., L4) beinhaltet, von denen ein Paar genutzt wird, um einen ersten Pol einer Fernspeisungsspannung zu übertragen und um Daten in einer ersten Richtung zu übertragen, und ein weiteres Paar wird dazu genutzt, den anderen Pol dieser Fernspeisungsspannung zu übertragen und Daten in eine andere Richtung zu übertragen; außerdem **dadurch gekennzeichnet, dass** die Mittel zur Verhinderung der Ausbreitung eines Gleichstroms von dieser Steckdose zum Endgerät einen Kondensator (C1, ..., C4) an jedem dieser Leiter beinhalten;
und **dadurch gekennzeichnet, dass** die Mittel, um dem Nutzer das Vorliegen einer Fernspeisungsspannung an der betreffenden Steckdose anzuzeigen, folgendes beinhalten:
- eine erste Brücke mit zwei Widerständen (R1, R2) parallel zum ersten Leiterpaar (L1 und L2);
- eine zweite Brücke mit zwei Widerständen (R3, R4) parallel zu dem zweiten Leiterpaar (L3 und L4);
- und ein Mittel zur Signalisierung (ZD, LED), das mit dem Mittelpunkt der ersten Brücke (R1, R2) und dem Mittelpunkt der zweiten Brücke (R3, R4) verbunden ist.

3. Schutzvorrichtung gemäß Anspruch 2, für ein Netz, das mindestens vier zusätzliche Leiter (L5, ..., L8) enthält, von denen ein Paar dazu genutzt wird, einen ersten Pol einer zweiten Fernspeisungsspannung zu übertragen und ein weiteres Paar wird dazu genutzt, den anderen Pol dieser zweiten Fernspeisungsspannung zu übertragen; außerdem **dadurch gekennzeichnet, dass** die Mittel zur Verhinderung der Ausbreitung eines Gleichstroms von dieser Steckdose zum Endgerät einen Kondensator (C1', ..., C4') jeweils an jedem dieser vier zusätzlichen Leiter beinhalten;
und **dadurch**, dass die Mittel, die dem Nutzer das Vorhandensein einer Fernspeisungsspannung an der betreffenden Steckdose anzeigen, folgendes beinhalten:
- eine dritte Brücke mit zwei Widerständen (R1', R2) parallel zum ersten Paar zusätzlicher Leiter (L4 und L5);
- eine vierte Brücke mit zwei Widerständen (R3', R4') parallel zu dem zweiten Paar zusätzlicher Leiter (L3 und L4);
- ein Mittel zur Signalisierung (ZD', LED'), das mit dem Mittelpunkt der dritten Brücke (R1', R2') und dem Mittelpunkt der vierten Brücke (R3', R4') verbunden ist.
